(19) Europäisches Patentamt
European Patent Office
Office européen des brevets

(11) **EP 4 746 412 A1**

(12) **EUROPEAN PATENT APPLICATION**

(43) Date of publication:
**20.05.2026 Bulletin 2026/21**

(21) Application number: **24306898.8**

(22) Date of filing: **13.11.2024**

(51) International Patent Classification (IPC):
**H04N 19/597** (2014.01)   **G06N 3/045** (2023.01)
**G06T 9/00** (2006.01)   **G06T 13/40** (2011.01)
**G06T 17/00** (2006.01)

(52) Cooperative Patent Classification (CPC):
**H04N 19/597; G06N 3/045; G06T 9/001;**
**G06T 9/002; G06T 13/40; G06T 17/00;**
G06T 2210/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **DAMODARAN, Bharath Bhushan**
  **56000 VANNES (FR)**

• **DUMOULIN, Antoine**
  **67240 BISCHWILLER (FR)**
• **BOUKHAYMA, Adnane**
  **35000 RENNES (FR)**
• **HELLIER, Pierre**
  **35235 THORIGNE-FOUILLARD (FR)**
• **WUHRER, Stefanie**
  **38000 GRENOBLE (FR)**

(74) Representative: **Vossius & Partner**
**Patentanwälte Rechtsanwälte mbB**
**Siebertstraße 3**
**81675 München (DE)**

(54) **ENCODING AND DECODING INFORMATION FOR GENERATION OF DYNAMIC THREE-DIMENSIONAL (3D) CLOTHING**

(57)    Encoding and decoding information for generation of dynamic three-dimensional (3D) clothing. For example, a method includes receiving, with a decoder, a plurality of parameters indicating a body motion, a body shape, and a characteristic of a clothing material and generating, with the decoder, a dynamic three-dimensional clothing based on the plurality of parameters, wherein the dynamic three-dimensional clothing is dynamic with respect to the body motion and the body shape.

EP 4 746 412 A1

**FIG. 1**

## Description

### BACKGROUND

The present application is related to encoding and decoding avatar three-dimensional (3D) representations. More specifically, the present application is related to encoding and decoding of information for generating dynamic 3D clothing.

### BRIEF SUMMARY

Briefly stated, in one embodiment, a method for generating a dynamic three-dimensional cloth, the method including: receiving, with a decoder, a plurality of parameters indicating a body motion, a body shape, and a characteristic of a clothing material; and generating, with the decoder, a dynamic three-dimensional clothing based on the plurality of parameters, wherein the dynamic three-dimensional clothing is dynamic with respect to the body motion and the body shape.

In a second embodiment, a method of encoding data, the method including: encoding, with an encoder, a latent diffusion model and a template garment into a bitstream, wherein the latent diffusion model is conditioned on a plurality of parameters indicating a body motion, a body shape, and a characteristic of a clothing material; and outputting, with the encoder, the encoded bitstream.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 is a diagram that illustrates an example of a 3D body model and an example of a canonical body model according to one or more embodiments of the present disclosure;

FIG. 5 is a diagram that illustrates a clothing geometry represented as a 2D UV geometric displacement over a 3D template triangle mesh according to one or more embodiments of the present disclosure;

FIG. 6 is a diagram illustrating an example training process of a latent diffusion model to generate dynamic 3D clothing according to one or more embodiments of the present disclosure;

FIG. 7 is a diagram illustrating an example reverse diffusion process of a latent diffusion model to generate dynamic 3D clothing according to one or more embodiments of the present disclosure;

FIG. 8 is a flowchart illustrating an example encoding process according to one or more embodiments of the present disclosure; and

FIG. 9 is a flowchart illustrating an example decoding process according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

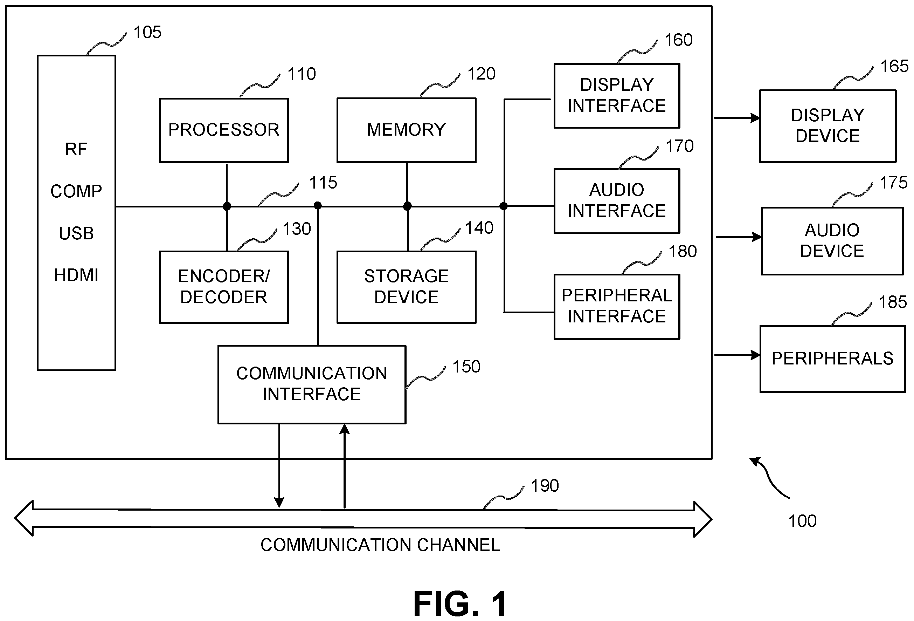

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 702.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

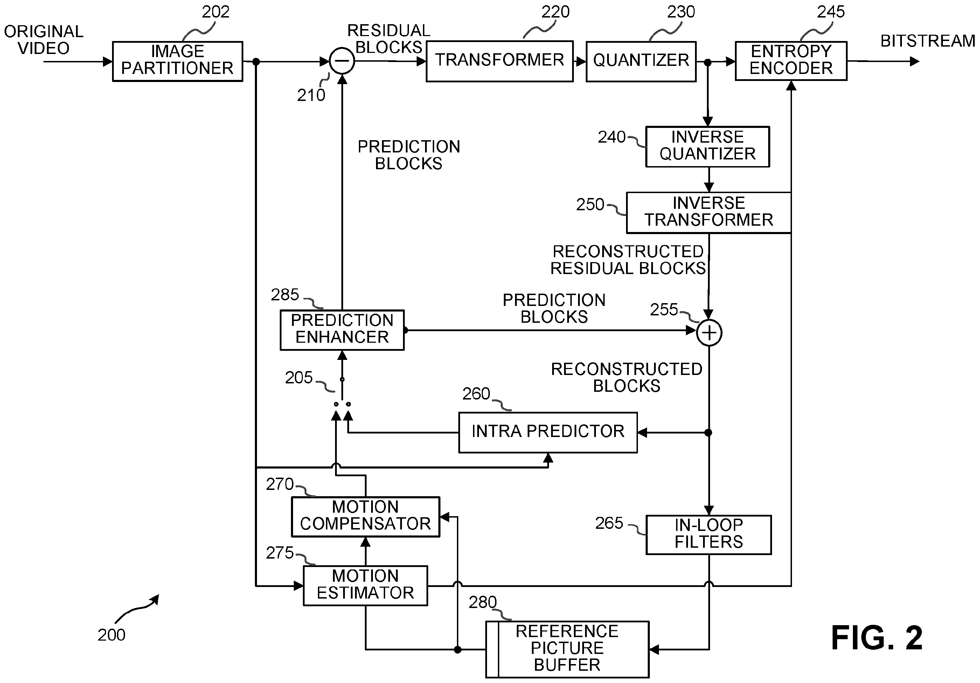

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

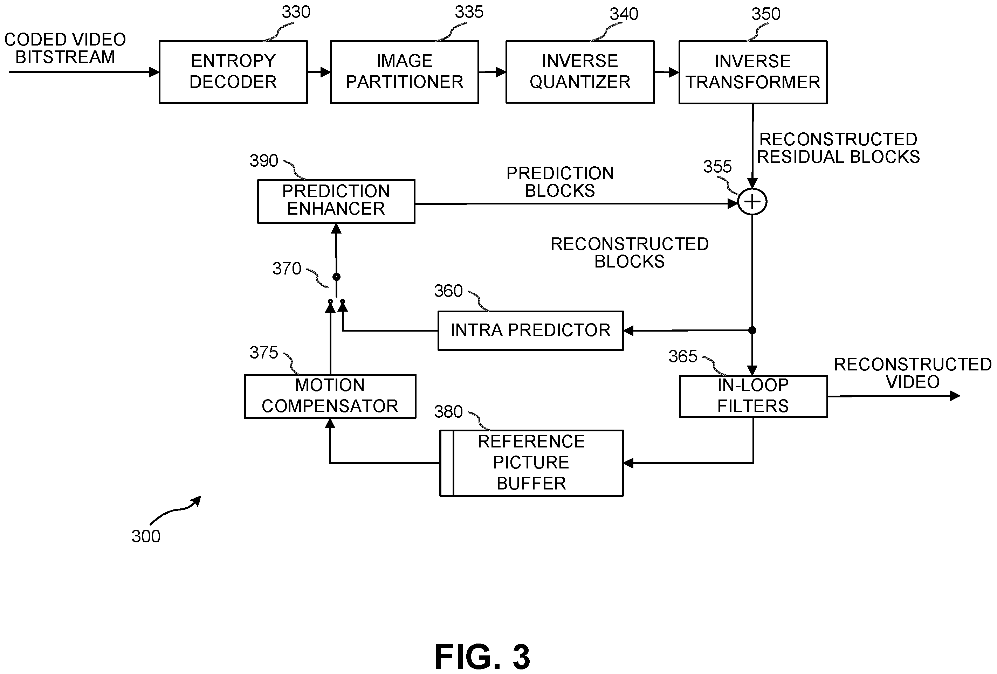

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are dequantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Dynamic dressed garments in three-dimensions (3D) are used in various virtual applications, ranging from entertainment industries such as video game, animation and augmented reality, to fashion with clothing design, virtual try-on. To use the dressed garments in 3D for the above applications, the dressed 3D model should be able to generate realistic and diverse garments, including physical clothing deformation based on the underlying body motion, shape, and poses, etc. Generative models parameterized by a neural network may be used to create such a 3D clothing model to facilitates the creation of digital contents. These models produce detailed and diverse garments and can be manipulated by parameters, such as, for example, a clothing embedding and the underneath body.

A 3D dressed body model can be developed either by using draping based methods or neural dynamic clothing simulation-based methods. In the draping based method, the model learns how the clothing material interacts and behaves with the body model based on the physical constraints and the model generates diverse garments draped over a body given a latent code and a parametric body model. The latent code describes the garment to be modeled. In addition to garment generation, these models are versatile with respect to garment reconstruction from images and allow retargeting garments to different avatars users (e.g., avatars associated with different users). However, most existing models limit conditioning to a single body pose, leading to garments posed in a static manner. Therefore, modeled garments lack dynamic details, including large deformations and fine dynamic wrinkles driven by human motion and clothing physics.

In contrast to draping based methods, neural dynamic cloth simulation methods predict realistic cloth dynamic on an object (e.g., a human avatar) in motion. The neural dynamic cloth simulation methods produce physically plausible cloth deformations given unseen garments, body shapes, and body motions. However, these neural dynamic cloth simulation methods are autoregressive models and are specifically designed to follow deterministic physical supervision. Other tasks such as garment registration with respect to the body model and generation are not straightforward to adapt to a model of the neural dynamic cloth simulation methods.

The present disclosure includes methods for modeling garments with dynamic details on top of a body in motion. One method of the present disclosure deforms a template garment under clothing material constraints, body shape constraints, and body motion constraints. To achieve this deformation of the template garment, the present disclosure leverages a two-dimensional (2D) latent diffusion model in UV space that is efficient to learn global and local information with conditioning. To overcome limitations in existing techniques for dynamic cloth generation, the model of the present disclosure learns loose clothing geometry with large deformations and dynamic wrinkles driven by body motion and clothing material.

In some examples, the 2D latent diffusion model learns the three-dimensional (3D) displacement from a fixed template to the current mesh positions in UV space. The learned conditions are one or more internal clothing material parameters, one or more body shape parameters, and three or more body pose parameters (e.g., the last three body pose parameters, such as, for example, obtained from a plurality of frames).

In the present disclosure, the latent diffusion model generates the dressed 3D body by conditioning with parameters extracted from the underlying body motion, the body shape, and the characteristics of the clothing material.

In particular, learning with the latent diffusion model occurs in the UV space, which enables the latent diffusion model to capture the local and global information of the 3D clothing.

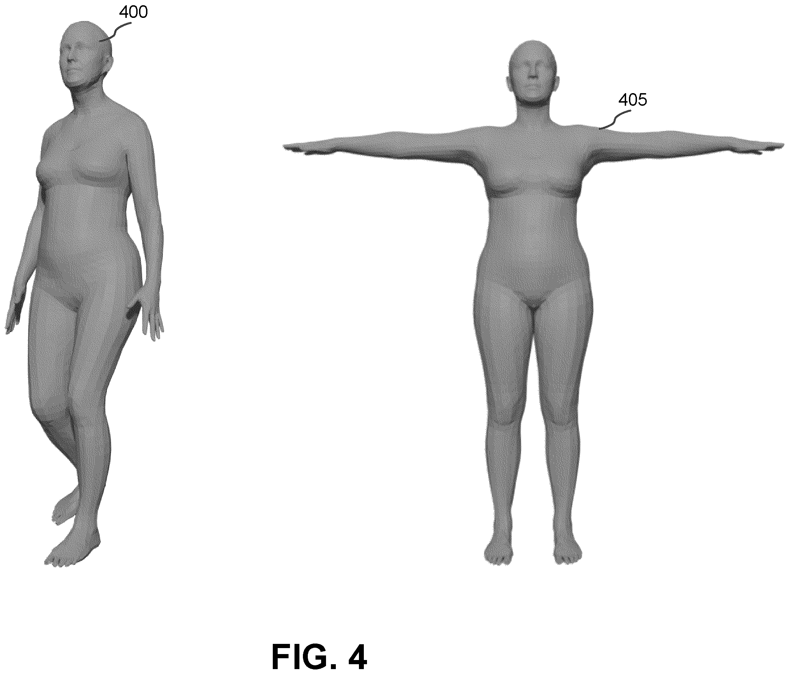

FIG. 4 is a diagram illustrating an example of a 3D body model 400 and an example of a canonical body model 405 according to one or more embodiments of the present disclosure.

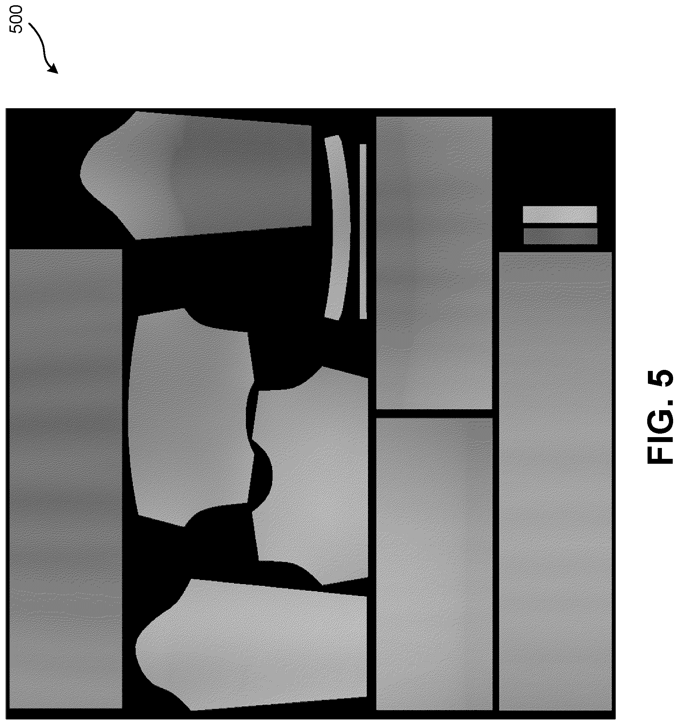

UV mapping or representation is a technique to represent the 3D model into the 2D surface, by mapping the 3D co-ordinates into the 2D plane. FIG. 5 is a diagram illustrating a clothing geometry 500 represented as a 2D UV geometric displacement over a 3D template triangle mesh according to one or more embodiments of the present disclosure. That is, for each garment type, a 3D template mesh may be determined, and then, for different simulation framerates, the 2D UV displacement map may be determined. This intermediate representation enables the usage of 2D convolutions that have been proven efficient in image generation learning local and global features.

The mesh topology may also be fixed to a template mesh based on the mean of the dataset, although another form of the template mesh may also be considered. The unwrapping function $\psi$ and the reverse function $\phi$, that respectively map 3D surface positions to a 2D texture of a given resolution and apply the texture positions to the surface.

Using the template mesh vertices $V^t$ and input clothing vertices $V$ an UV geometric displacement map $\Delta_{\square}(u, v)$ is computed as set forth by Expression (1).

$$(1) \quad \Delta_{\square}(u, v) = \psi(V) - \psi(V^t)$$

The resulting clothing vertices $V^{\square}$ positions are computed as set forth by Expression (2).

$$(2) \quad V = \phi(\psi(V^t) + \Delta_{\square}(u, v))$$

In some examples, the computation of the UV map may be performed using Optcuts. However, the computation of the UV map is not limited to Optcuts and other computational methods and/or tools may be used in place of Optcuts.

Diffusion models are generative models that generate high quality data, such as, for example, audio, images, etc. Diffusion models work by adding a small amount of Gaussian noise ($\varepsilon$) to the data sequentially in the forward process, and, in the backward process, the diffusion models learn to reverse from noise to the data. After training, the diffusion models are used to generate high-quality data from noise. The latent diffusion model is a variant of the diffusion model, where data is transformed into the latent space by the encoder network of a variational autoencoder, and the diffusion process is performed in this latent space, and then the decoder network of the variational autoencoder reconstructs the data from the latent space.

The techniques and devices of the present disclosure are based on a latent diffusion model. That is, a latent diffusion model is trained on geometric displacement maps $\Delta(u, v)$ of a specific resolution (e.g., 512 pixels). The latent diffusion model is conditioned on a body shape parameter $\beta$, one or more parameters of a sequence of three or more body poses $\theta$ with global translation from the parametric body model, and a physical material parameter $\gamma$ that includes bending, stretching, density, or a combination thereof. The latent diffusion model may also learn clothing material parameters that are internal to clothing fixing external factors. The clothing fixing external factors including friction, air viscosity, gravity, and/or simulation framerate.

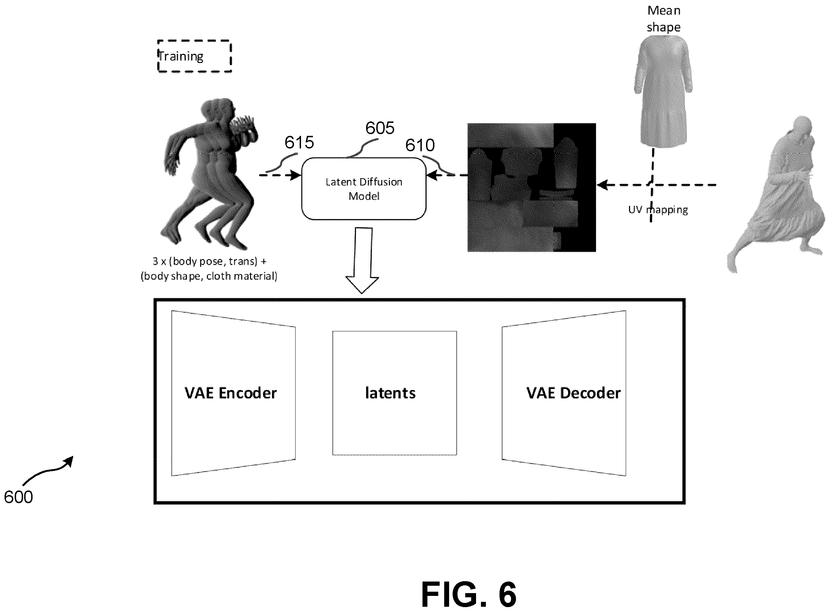

FIG. 6 is a diagram illustrating an example training process 600 of a latent diffusion model 605 to generate dynamic 3D clothing according to one or more embodiments of the present disclosure. In FIG. 6, the example training process 600 includes inputting a UV displacement map ($\Delta$) 610 and three or more conditioning parameters 615 (one or more parameters indicating a body pose, one or more parameters indicating a body shape, and one or more parameters indicating a clothing material).

In FIG. 6, the example training process 600 includes a pretrained variational autoencoder block that is frozen during the core model training. After receiving the UV displacement map ($\Delta$) and the conditioning parameters as inputs, the latent diffusion model outputs the predicted UV displacement map ($\hat{\Delta}$). In some examples, the conditioning parameters are optimized using the stochastic gradient descent or its variants by minimizing the prediction error between the ground truth UV displacement map ($\Delta$) with added random noise and the predicted residual added noise using the stochastic gradient descent. However, any reconstruction loss may be used, such as mean squared error, binary cross entropy, perceptual losses, etc. In addition to the reconstruction loss, the regularization losses such as $l_2$ regularization, $l_1$ regularization, and total variation losses may also be used.

Although the example training process 600 is one example of training the latent diffusion model, other training variations may be used to train the latent diffusion model. For example, training of the latent diffusion model may include comparing a predicted latent to an encoded ground truth. In other examples, training of the latent diffusion model may include training with other metrics based on the residual noise prediction (the predicted latent is actually computed by removing this predicted noise to the noisy encoded input).

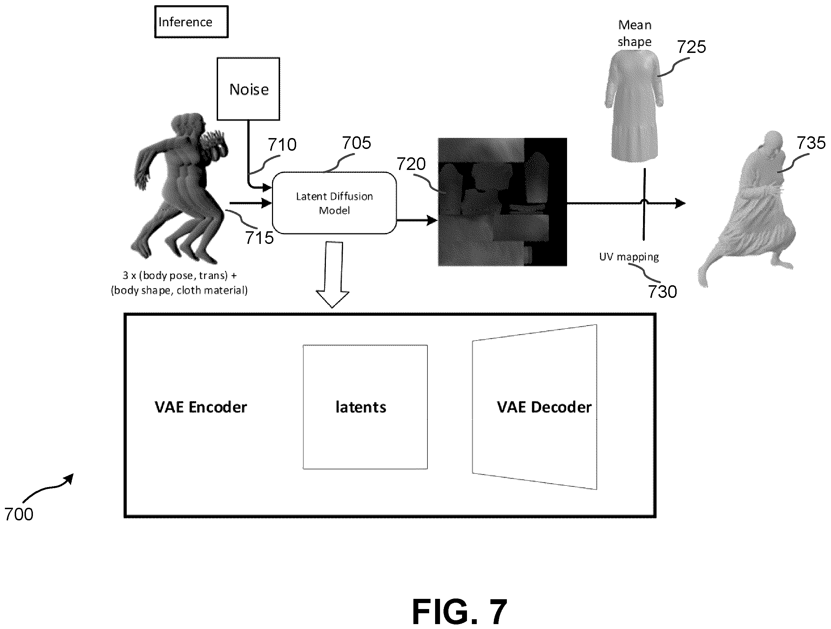

For inference, the reverse diffusion process may be used. FIG. 7 is a diagram illustrating an example reverse diffusion process 700 of a latent diffusion model used to generate dynamic 3D clothing according to one or more examples of the present disclosure.

The latent diffusion model 705 receives the sampled Gaussian noise ($\varepsilon \sim N(0,1)$) 710 and the conditioning parameters 715 as inputs, and outputs the predicted UV displacement map $\hat{\Delta}$ 720. Then the predicted UV displacement map $\hat{\Delta}$ 720 is added back to the UV map of the mean shape or the template garment mesh 725 to obtain the UV map 730 of the deformed 3D clothing 735 (also referred to herein as the dynamic 3D clothing). The inverse function $\phi$ is then applied to map from the UV map 730 to the 3D surface 735.

In some examples, the sampled Gaussian noise 705 (latent code) may also be optimized during inference by minimizing the texels distance, collision, and temporal consistency loss and by combining the following losses (set forth as Expressions 3-5), geometric/spatial discontinuities at UV seams and collisions (cloth-body penetration) may be avoided, and temporal consistency (avoiding temporal discontinuities) may be realized.

$$(3) \quad L_{UV} = \sum_{p\in\psi(V')}|p - nn(p,V')|$$

$$(4) \quad L_{collision} = \sum_{p\in V'}\max(\epsilon - d(x),0)^3$$

$$(5) \quad L_{physic} = \sum_{edges}|length_t - length_{t-1}|$$

In Expression (3), $nn()$ is the nearest neighbor within the set $V'$, or it can be a look-up function returning the nearest vertex that corresponds to a given texel. In Expression (4), $d(x)$ is the distance to body function. In Expression (5), *length* is the distance between the edges, and *t* is the simulation framerate or frame.

In some examples, the latent diffusion model 705 may be fit to a 3D scan of a dressed person. Given a reconstructed dressed person of a multi-view dataset, a clothing model and a body model may be jointly optimized to the ground truth mesh. First, a rough estimation of the underlying body shape and pose parameters may be extracted. Second, the extracted pose may be repeated to the conditioning sequence dimension. Given this initialization, the conditioning parameters 715 and the input noise 710 of the latent diffusion model 705 may be optimized to minimize the distance from the generated clothing and body to the ground truth mesh.

In other examples, the latent diffusion model may be fit to a 4D scan of a dressed person. Given a reconstructed sequence of the multi-view dataset, a clothing model and a body model may be jointly optimized to the ground truth mesh sequence. First, a rough estimation of the underlying body shape and pose parameters may be extracted. Given this initialization, the conditioning parameters and the input noise of the latent diffusion model may be optimized to minimize the distance from the generated sequence of clothes and bodies to the ground truth mesh sequence.

Additionally, to perform an inference, a trained latent diffusion model and a template garment shape is made available to the decoder side. In some examples, the parametric body model may also be available at the decoding side to extract the body parameters.

In some examples, the trained latent diffusion model may be encoded in the bitstream. This may involve any entropic coding methods, such as, for example, the Neural Network Coding (NNC)/ ISO/IEC 15938-17 or MPEG-7 part 17 or simply by quantizing the weights. The encoding techniques may be standardized and known both to an encoder and a decoder.

In these examples, the template garment shape may also be encoded in the bitstream. This may involve any entropic coding methods, such as, for example, the Neural Network Coding (NNC)/ ISO/IEC 15938-17 or MPEG-7 part 17 as the meshes can be converted into tensors. The encoding techniques may be standardized and known both to the encoder and decoder.

In some examples, for each garment type, there will be a specific trained latent diffusion model and a template garment shape associated with the specific trained latent diffusion model, and a similar encoding procedure may be applied.

Additionally, when the trained latent diffusion model and template garment shape are known to the decoder or otherwise accessible to the decoder (e.g., stored in a cloud environment), the trained latent diffusion model used during inference needs the parametric body model parameters (e.g., the conditioning parameters). In some examples, body shape parameter(s), pose parameter(s), and clothing parameter(s) may also be encoded in the bitstream, which may involve the entropic coders for the transmission to the decoder.

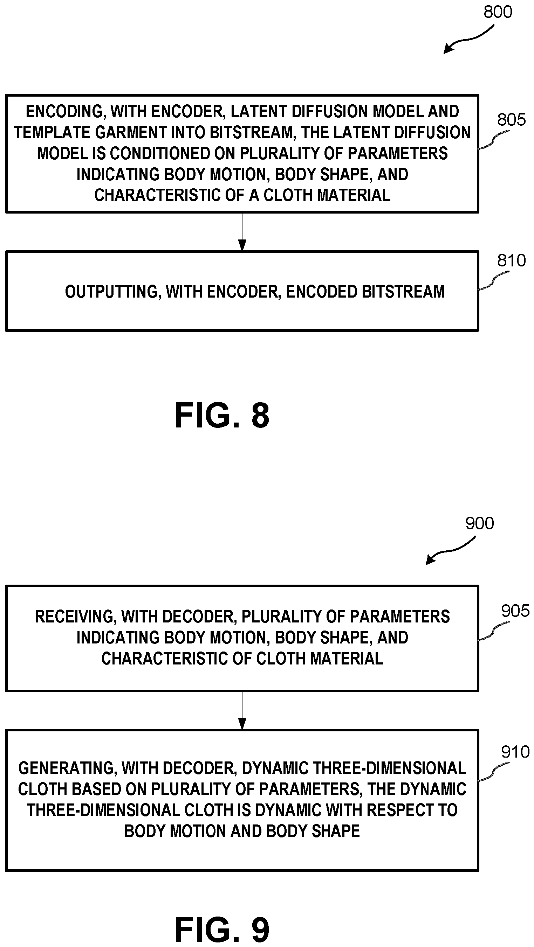

FIG. 8 is a flowchart illustrating an example encoding process 800 according to one or more examples of the present disclosure. FIG. 8 is also described with respect to FIG. 2.

The example encoding process includes encoding, with an encoder, a latent diffusion model and a template garment into a bitstream, wherein the latent diffusion model is conditioned on a plurality of parameters indicating a body motion, a body shape, and a characteristic of a clothing material (at block 805). For example, the video encoder 200 encodes a latent diffusion model and a template garment into a bitstream, wherein the latent diffusion model is conditioned on a plurality of parameters indicating a body motion, a body shape, and a characteristic of a clothing material.

The example encoding process 800 also includes outputting, with the encoder, the encoded bitstream (at block 810). For example, the video encoder 200 outputs the encoded bitstream.

In some examples, the example encoding process 800 may further include training the latent diffusion model on a ground-truth two-dimensional UV displacement map. In these examples, the training the latent diffusion model on the ground-truth two-dimensional UV displacement map includes: encoding, with the encoder, the ground-truth two-dimensional UV displacement map into a latent space, adding random noise to the encoded two-dimensional UV displacement map encoded in the latent space, decoding, with a decoder, the encoded two-dimensional UV displacement map to generate a decoded two-dimensional UV displacement map, and minimizing a prediction error between the ground-truth two-dimensional UV displacement map and the decoded two-dimensional UV displacement map. Additionally, in these examples, minimizing the prediction error may include using a stochastic gradient descent.

In some examples, the example encoding process 800 may further include receiving a reconstructed dressed person of a multi-view dataset, extracting an underlying body shape and pose parameters of the reconstructed dressed person, and optimizing condition parameters and input noise of the latent diffusion model to minimize distance from a generated clothing and body to a ground truth.

In some examples, the example encoding process 800 may further include receiving a reconstructed sequence of body motion of a multi-view dataset, extracting an estimation of an underlying body shape and pose parameters of the reconstructed sequence of the body motion, and optimizing condition parameters and input noise of the latent diffusion model to minimize distance from a generated sequences of clothes and bodies to a ground truth sequence mesh.

With respect to the decoder device, in some examples, the latent diffusion model parameters may be decoded from the bitstream. This may involve the use of entropy decoders. In these examples, the template garment (e.g., the template garment shape) may also be decoded from the bitstream. This may also involve the use of the entropy decoders. Additionally, when the trained latent diffusion model and the template garment mesh are available at the decoder device, then the conditioning parameters may also be decoded from the bitstream, which may involve use of the entropy coders.

FIG. 9 is a flowchart illustrating an example decoding process 900 according to one or more examples of the present disclosure. FIG. 9 is described with respect to FIG. 3.

The example decoding process 900 includes receiving, with a decoder, a plurality of parameters indicating a body motion, a body shape, and a characteristic of a clothing material (at operation 905). For example, the video decoder 300 receives a plurality of parameters indicating a body motion, a body shape, and a characteristic of a clothing material.

The example decoding process 900 also includes generating, with the decoder, a dynamic three-dimensional clothing based on the plurality of parameters, wherein the dynamic three-dimensional clothing is dynamic with respect to the body motion and the body shape (at operation 910). For example, the video decoder 300 generates a dynamic three-dimensional clothing based on the plurality of parameters.

In some examples, the example decoding process 900 may further include responsive to receiving the plurality of parameters, determining, with the decoder, whether a latent diffusion model and a template garment are encoded in a bitstream, responsive to determining that the latent diffusion model and the template garment are encoded in the bitstream, decoding, with the decoder, the latent diffusion model and the template garment from the bitstream, and the dynamic three-dimensional clothing is generated with the decoder using the latent diffusion model and the template garment. In these examples, the latent diffusion model is trained on a ground-truth two-dimensional UV displacement map conditioned on the plurality of parameters.

In some examples, generating, with the decoder, the dynamic three-dimensional clothing based on the plurality of parameters may further include generating, with the latent diffusion model as trained, a predicted two-dimensional UV displacement map for a noise sample conditioned on inputs corresponding to the plurality of parameters, and mapping the predicted two-dimensional UV displacement map to a three-dimensional object model.

In some examples, the example decoding process 900 may further include optimizing the noise sample by minimizing texels distance, collision loss, and temporal consistency loss, the noise sample being a sampled Gaussian noise. In these examples, mapping the predicted two-dimensional UV displacement map to a three-dimensional body model may further include adding the predicted two-dimensional UV displacement map to a UV map of a mean shape to obtain a two-dimensional UV displacement map of a dynamic three-dimensional cloth, and applying an inverse function to apply the two-dimensional UV displacement map of the dynamic three-dimensional clothing to a three-dimensional surface of the three-dimensional body model.

In some examples, the example decoding process 900 may further include responsive to receiving the plurality of parameters, determining, with the decoder, whether a latent diffusion model and a template garment are flagged in a bitstream, responsive to determining that the latent diffusion model and the template garment are flagged in the bitstream, determining whether the flagged latent diffusion model and the flagged template garment are available in a local memory, and responsive to determining that the latent diffusion model and the template garment are available in the local memory, generating, with the decoder using the flagged latent diffusion model and the flagged template garment, the dynamic three-dimensional clothing based on the plurality of parameters.

In these examples, the flagged latent diffusion model is one of a plurality of latent diffusion models stored in the local memory, wherein the flagged template garment is one of a plurality of template garments stored in the local memory, and wherein each of the plurality of template garments is associated with one of the plurality of latent diffusion models.

In some examples, the example decoding process 900 may further include responsive to receiving the plurality of parameters, determining, with the decoder, whether a latent diffusion model and a template garment are flagged in a bitstream, responsive to determining that the latent diffusion model and the template garment are flagged in the bitstream, determining whether the flagged latent diffusion model and the flagged template garment are available in a local memory, and responsive to determining that the flagged latent diffusion model and the flagged template garment are not available in the local memory, identifying, with the decoder, a second decoder that stores flagged latent diffusion model and the flagged template garment, the second decoder is distinct from the decoder, and generating, with the decoder, the dynamic three-dimensional clothing based on the plurality of parameters further includes outputting the plurality of parameters, an identification of the flagged latent diffusion model, and an identification of the flagged template garment to the second decoder, and receiving the dynamic three-dimensional clothing from the second decoder. In some examples, the second decoder may be a cloud server.

In some examples, the body motion may be a sequence of body poses. In these examples, the sequence of body poses may include three or more poses with global translation from a parametric body model.

In some examples, the characteristics of the clothing material may include a bending characteristic, a stretching characteristic, a density characteristic, or a combination thereof. In some examples, the body shape may be a descriptor of a whole body, the whole body includes one or more size parameters, and the body shape is part of a parametric body model that generates a 3D body model given the body shape and one or more body poses.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. A bitstream that includes one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The following are enumerated examples of methods, devices, and non-transitory computer-readable media of the present application.

Example 1: a method for generating a dynamic three-dimensional cloth, the method comprising: receiving, with a decoder, a plurality of parameters indicating a body motion, a body shape, and a characteristic of a clothing material; and generating, with the decoder, a dynamic three-dimensional clothing based on the plurality of parameters, wherein the dynamic three-dimensional clothing is dynamic with respect to the body motion and the body shape.

Example 2: the method of Example 1, further comprising: responsive to receiving the plurality of parameters, determining, with the decoder, whether a latent diffusion model and a template garment are encoded in a bitstream; responsive to determining that the latent diffusion model and the template garment are encoded in the bitstream, decoding, with the decoder, the latent diffusion model and the template garment from the bitstream; wherein the dynamic three-dimensional clothing is generated with the decoder using the latent diffusion model and the template garment.

Example 3: the method of Example 2, wherein the latent diffusion model is trained on a ground-truth two-dimensional UV displacement map conditioned on the plurality of parameters.

Example 4: the method of Example 3, wherein generating, with the decoder, the dynamic three-dimensional clothing based on the plurality of parameters further includes generating, with the latent diffusion model as trained, a predicted two-dimensional UV displacement map for a noise sample conditioned on inputs corresponding to the plurality of parameters; and mapping the predicted two-dimensional UV displacement map to a three-dimensional object model.

Example 5: the method of Example 4, further comprising: optimizing the noise sample by minimizing texels distance, collision loss, and temporal consistency loss, wherein the noise sample is a sampled Gaussian noise.

Example 6: the method of Example 4, wherein mapping the predicted two-dimensional UV displacement map to a three-dimensional body model includes adding the predicted two-dimensional UV displacement map to a UV map of a mean shape to obtain a two-dimensional UV displacement map of a dynamic three-dimensional cloth, and applying an inverse function to apply the two-dimensional UV displacement map of the dynamic three-dimensional clothing to a three-dimensional surface of the three-dimensional body model.

Example 7: the method of any of Examples 1-6, further comprising: responsive to receiving the plurality of parameters, determining, with the decoder, whether a latent diffusion model and a template garment are flagged in a bitstream; responsive to determining that the latent diffusion model and the template garment are flagged in the bitstream, determining whether the flagged latent diffusion model and the flagged template garment are available in a local memory; responsive to determining that the latent diffusion model and the template garment are available in the local memory, generating, with the decoder using the flagged latent diffusion model and the flagged template garment, the dynamic three-dimensional clothing based on the plurality of parameters.

Example 8: the method of Example 7, wherein the flagged latent diffusion model is one of a plurality of latent diffusion models stored in the local memory, wherein the flagged template garment is one of a plurality of template garments stored in the local memory, and wherein each of the plurality of template garments is associated with one of the plurality of latent diffusion models.

Example 9: the method of any of Examples 1-8, further comprising: responsive to receiving the plurality of parameters, determining, with the decoder, whether a latent diffusion model and a template garment are flagged in a bitstream; responsive to determining that the latent diffusion model and the template garment are flagged in the bitstream, determining whether the flagged latent diffusion model and the flagged template garment are available in a local memory; and responsive to determining that the flagged latent diffusion model and the flagged template garment are not available in the local memory, identifying, with the decoder, a second decoder that stores flagged latent diffusion model and the flagged template garment, the second decoder is distinct from the decoder; wherein generating, with the decoder, the dynamic three-dimensional clothing based on the plurality of parameters further includes outputting the plurality of parameters, an identification of the flagged latent diffusion model, and an identification of the flagged template garment to the second decoder, and receiving the dynamic three-dimensional clothing from the second decoder.

Example 10: the method of any of Examples 1-9, wherein the body motion is a sequence of body poses.

Example 11: the method of Example 10, wherein the sequence of body poses includes three or more poses with global translation from a parametric body model.

Example 12: the method of any of Examples 1-11, wherein the characteristic of the clothing material include a bending characteristic, a stretching characteristic, a density characteristic, or a combination thereof.

Example 13: the method of any of Examples 1-12, wherein the body shape is a descriptor of a whole body, wherein the whole body includes one or more size parameters, and wherein the body shape is part of a parametric body model that generates a 3D body model given the body shape and one or more body poses.

Example 14: a device comprising: a decoder configured to receive a plurality of parameters indicating a body motion, a body shape, and a characteristic of a clothing material, and generate a dynamic three-dimensional clothing based on the plurality of parameters, wherein the dynamic three-dimensional clothing is dynamic with respect to the body motion and the body shape.

Example 15: the device of Example 14, wherein the decoder is further configured to: responsive to receiving the plurality of parameters, determine whether a latent diffusion model and a template garment are encoded in a bitstream, and responsive to determining that the latent diffusion model and the template garment are encoded in the bitstream, decode the latent diffusion model and the template garment from the bitstream, wherein the dynamic three-dimensional clothing is generated with the decoder using the latent diffusion model and the template garment.

Example 16: the device of Example 15, wherein the latent diffusion model is trained on a ground-truth two-dimensional UV displacement map conditioned on the plurality of parameters.

Example 17: the device of Example 16, wherein, to generate the dynamic three-dimensional clothing based on the plurality of parameters, the decoder is further configured to: generate, with the latent diffusion model as trained, a predicted two-dimensional UV displacement map for a noise sample conditioned on inputs corresponding to the plurality of parameters, and map the predicted two-dimensional UV displacement map to a three-dimensional object model.

Example 18: the device of Example 17, wherein the decoder is further configured to: optimize the noise sample by minimizing texels distance, collision loss, and temporal consistency loss, wherein the noise sample is a sampled Gaussian noise.

Example 19: the device of Examples 17 or 18, wherein, to map the predicted two-dimensional UV displacement map to a three-dimensional body model, the decoder is further configured to: add the predicted two-dimensional UV displacement map to a UV map of a mean shape to obtain a two-dimensional UV displacement map of a dynamic three-dimensional cloth, and apply an inverse function to apply the two-dimensional UV displacement map of the dynamic three-dimensional clothing to a three-dimensional surface of the three-dimensional body model.

Example 20: the device of any of Examples 14-19, wherein the decoder is further configured to: responsive to receiving the plurality of parameters, determine whether a latent diffusion model and a template garment are flagged in a bitstream, responsive to determining that the latent diffusion model and the template garment are flagged in the bitstream, determine whether the flagged latent diffusion model and the flagged template garment are available in a local memory, and responsive to determining that the latent diffusion model and the template garment are available in the local memory, generate, with the flagged latent diffusion model and the flagged template garment, the dynamic three-dimensional clothing based on the plurality of parameters.

Example 21: the device of Example 20, wherein the flagged latent diffusion model is one of a plurality of latent diffusion models stored in the local memory, wherein the flagged template garment is one of a plurality of template garments stored in the local memory, and wherein each of the plurality of template garments is associated with one of the plurality of latent diffusion models.

Example 22: the device of any of Examples 14-21, wherein the decoder is further configured to: responsive to receiving the plurality of parameters, determine whether a latent diffusion model and a template garment are flagged in a bitstream, responsive to determining that the latent diffusion model and the template garment are flagged in the bitstream, determine whether the flagged latent diffusion model and the flagged template garment are available in a local memory, and responsive to determining that the flagged latent diffusion model and the flagged template garment are not available in the local memory, identify a second decoder that stores flagged latent diffusion model and the flagged template garment, the second decoder is distinct from the decoder, wherein, to generate the dynamic three-dimensional clothing based on the plurality of parameters, the decoder is further configured to output the plurality of parameters, an identification of the flagged latent diffusion model, and an identification of the flagged template garment to the second decoder, and receive the dynamic three-dimensional clothing from the second decoder.

Example 23: the device of any of Examples 14-22, wherein the body motion is a sequence of body poses.

Example 24: the device of Example 23, wherein the sequence of body poses includes three or more poses with global translation from a parametric body model.

Example 25: the device of any of Examples 14-24, wherein the characteristic of the clothing material include a bending characteristic, a stretching characteristic, a density characteristic, or a combination thereof.

Example 26: the device of any of Examples 14-25, wherein the body shape is a descriptor of a whole body, wherein the whole body includes one or more size parameters, and wherein the body shape is part of a parametric body model that generates a 3D body model given the body shape and one or more body poses.

Example 27: a non-transitory computer-readable medium comprising instructions for generating a dynamic three-dimensional cloth, that when executed by an electronic processor, cause the electronic processor to perform a set of operations: receiving a plurality of parameters indicating a body motion, a body shape, and a characteristic of a clothing material; and generating a dynamic three-dimensional clothing based on the plurality of parameters, wherein the dynamic three-dimensional clothing is dynamic with respect to the body motion and the body shape.

Example 28: the non-transitory computer-readable medium of Example 27, wherein the set of operations further includes responsive to receiving the plurality of parameters, determining whether a latent diffusion model and a template garment are encoded in a bitstream; responsive to determining that the latent diffusion model and the template garment are encoded in the bitstream, decoding the latent diffusion model and the template garment from the bitstream; wherein the dynamic three-dimensional clothing is generated using the latent diffusion model and the template garment.

Example 29: the non-transitory computer-readable medium of Example 28, wherein the latent diffusion model is trained on a ground-truth two-dimensional UV displacement map conditioned on the plurality of parameters.

Example 30: the non-transitory computer-readable medium of Example 29, wherein generating the dynamic three-dimensional clothing based on the plurality of parameters further includes generating, with the latent diffusion model as trained, a predicted two-dimensional UV displacement map for a noise sample conditioned on inputs corresponding to the plurality of parameters; and mapping the predicted two-dimensional UV displacement map to a three-dimensional object model.

Example 31: the non-transitory computer-readable medium of Example 30, wherein the set of operations further includes optimizing the noise sample by minimizing texels distance, collision loss, and temporal consistency loss, wherein the noise sample is a sampled Gaussian noise.

Example 32: the non-transitory computer-readable medium of Examples 30 or 31, wherein mapping the predicted two-dimensional UV displacement map to a three-dimensional body model includes adding the predicted two-dimensional UV displacement map to a UV map of a mean shape to obtain a two-dimensional UV displacement map of a dynamic three-dimensional cloth, and applying an inverse function to apply the two-dimensional UV displacement map of the dynamic three-dimensional clothing to a three-dimensional surface of the three-dimensional body model.

Example 33: the non-transitory computer-readable medium of any of Examples 27-32, wherein the set of operations further includes responsive to receiving the plurality of parameters, determining whether a latent diffusion model and a template garment are flagged in a bitstream; responsive to determining that the latent diffusion model and the template garment are flagged in the bitstream, determining whether the flagged latent diffusion model and the flagged template garment are available in a local memory; responsive to determining that the latent diffusion model and the template garment are available in the local memory the dynamic three-dimensional clothing based on the plurality of parameters.

Example 34: the non-transitory computer-readable medium of Example 33, wherein the flagged latent diffusion model is one of a plurality of latent diffusion models stored in the local memory, wherein the flagged template garment is one of a plurality of template garments stored in the local memory, and wherein each of the plurality of template garments is associated with one of the plurality of latent diffusion models.

Example 35: the non-transitory computer-readable medium of any of Examples 27-34, wherein the set of operations further includes responsive to receiving the plurality of parameters, determining whether a latent diffusion model and a template garment are flagged in a bitstream; responsive to determining that the latent diffusion model and the template garment are flagged in the bitstream, determining whether the flagged latent diffusion model and the flagged template garment are available in a local memory; and responsive to determining that the flagged latent diffusion model and the flagged template garment are not available in the local memory, identifying a decoder that stores flagged latent diffusion model and the flagged template garment; wherein generating the dynamic three-dimensional clothing based on the plurality of parameters further includes outputting the plurality of parameters, an identification of the flagged latent diffusion model, and an identification of the flagged template garment to the decoder, and receiving the dynamic three-dimensional clothing from the decoder.

Example 36: the non-transitory computer-readable medium of any of Examples 27-35, wherein the body motion is a sequence of body poses.

Example 37: the non-transitory computer-readable medium of Example 36, wherein the sequence of body poses includes three or more poses with global translation from a parametric body model.

Example 38: the non-transitory computer-readable medium of any of Examples 27-37, wherein the characteristic of the clothing material include a bending characteristic, a stretching characteristic, a density characteristic, or a combination thereof.

Example 39: the non-transitory computer-readable medium of any of Examples 27-38, wherein the body shape is a descriptor of a whole body, wherein the whole body includes one or more size parameters, and wherein the body shape is part of a parametric body model that generates a 3D body model given the body shape and one or more body poses.

Example 40: a method of encoding data, the method comprising: encoding, with an encoder, a latent diffusion model and a template garment into a bitstream, wherein the latent diffusion model is conditioned on a plurality of parameters indicating a body motion, a body shape, and a characteristic of a clothing material; and outputting, with the encoder, the encoded bitstream.

Example 41: the method of Example 40, further comprising: training the latent diffusion model on a ground-truth two-dimensional UV displacement map.

Example 42: the method of Example 41, wherein training the latent diffusion model on the ground-truth two-dimensional UV displacement map includes: encoding, with the encoder, the ground-truth two-dimensional UV displacement map into a latent space; adding random noise to the encoded two-dimensional UV displacement map encoded in the latent space; decoding, with a decoder, the encoded two-dimensional UV displacement map to generate a decoded two-dimensional UV displacement map; and minimizing a prediction error between the ground-truth two-dimensional UV displacement map and the decoded two-dimensional UV displacement map.

Example 43: the method of Example 42, wherein minimizing the prediction error includes using a stochastic gradient descent.

Example 44: the method of any of Examples 40-43, further comprising: receiving a reconstructed dressed person of a multi-view dataset; extracting an underlying body shape and pose parameters of the reconstructed dressed person; and optimizing condition parameters and input noise of the latent diffusion model to minimize distance from a generated clothing and body to a ground truth.

Example 45: the method of any of Examples 40-44, further comprising: receiving a reconstructed sequence of body motion of a multi-view dataset; extracting an estimation of an underlying body shape and pose parameters of the reconstructed sequence of body motion; and optimizing condition parameters and input noise of the latent diffusion model to minimize distance from a generated sequences of clothes and bodies to a ground truth sequence mesh.

Example 46: a device comprising: an encoder configured to: encode a latent diffusion model and a template garment into a bitstream, wherein the latent diffusion model is conditioned on a plurality of parameters indicating a body motion, a body shape, and a characteristic of a clothing material, and output the encoded bitstream.

Example 47: the device of Example 46, wherein the encoder is further configured to train the latent diffusion model on a ground-truth two-dimensional UV displacement map.

Example 48: the device of Example 47, wherein, to train the latent diffusion model on the ground-truth two-dimensional UV displacement map, the encoder is further configured to: encode the ground-truth two-dimensional UV displacement map into a latent space, add random noise to the encoded two-dimensional UV displacement map encoded in the latent space, decode the encoded two-dimensional UV displacement map to generate a decoded two-dimensional UV displacement map, and minimize a prediction error between the ground-truth two-dimensional UV displacement map and the decoded two-dimensional UV displacement map.

Example 49: the device of Example 48, wherein, to minimize the prediction error, the encoder uses a stochastic gradient descent.

Example 50: the device of any of Examples 46-49, wherein the encoder is further configured to: receive a reconstructed dressed person of a multi-view dataset, extract an underlying body shape and pose parameters of the reconstructed dressed person, and optimize condition parameters and input noise of the latent diffusion model to minimize distance from a generated clothing and body to a ground truth.

Example 51: the device of any of Examples 46-50, wherein the encoder is further configured to: receive a reconstructed sequence of body motion of a multi-view dataset, extract an estimation of an underlying body shape and pose parameters of the reconstructed sequence of body motion, and optimize condition parameters and input noise of the latent diffusion model to minimize distance from a generated sequences of clothes and bodies to a ground truth sequence mesh.

Example 52: a non-transitory computer-readable medium comprising instructions for encoding data that, when executed by an electronic processor, cause the electronic processor to perform a set of operations comprising: encoding a latent diffusion model and a template garment into a bitstream, wherein the latent diffusion model is conditioned on a plurality of parameters indicating a body motion, a body shape, and a characteristic of a clothing material; and outputting the encoded bitstream.

Example 53: the non-transitory computer-readable medium of Example 52, wherein the set of operations further includes training the latent diffusion model on a ground-truth two-dimensional UV displacement map.

Example 54: the non-transitory computer-readable medium of Example 53, wherein training the latent diffusion model on the ground-truth two-dimensional UV displacement map further includes encoding the ground-truth two-dimensional UV displacement map into a latent space; adding random noise to the encoded two-dimensional UV displacement map encoded in the latent space; decoding the encoded two-dimensional UV displacement map to generate a decoded two-dimensional UV displacement map; and minimizing a prediction error between the ground-truth two-dimensional UV displacement map and the decoded two-dimensional UV displacement map.

Example 55: the non-transitory computer-readable medium of Example 54, wherein minimizing the prediction error further includes using a stochastic gradient descent.

Example 56: the non-transitory computer-readable medium of any of Examples 52-55, wherein the set of operations further includes receiving a reconstructed dressed person of a multi-view dataset; extracting an underlying body shape and pose parameters of the reconstructed dressed person; and optimizing condition parameters and input noise of the latent diffusion model to minimize distance from a generated clothing and body to a ground truth.

Example 57: the non-transitory computer-readable medium of any of Examples 52-56, wherein the set of operations further includes receiving a reconstructed sequence of body motion of a multi-view dataset; extracting an estimation of an underlying body shape and pose parameters of the reconstructed sequence of body motion; and optimizing condition parameters and input noise of the latent diffusion model to minimize distance from a generated sequences of clothes and bodies to a ground truth sequence mesh.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

 i. session description protocol (SDP), for example as described in RFCs and/or used in conjunction with real-time transport protocol (RTP) transmission.

 ii. hypertext transfer protocol (HTTP) live Streaming (HLS) manifest transmitted over HTTP.

 iii. dynamic adaptive streaming over HTTP (DASH) media presentation description (MPD) descriptors, for example as used in DASH and transmitted over HTTP.

 iv. RTP header extensions, for example as used during RTP streaming.

 v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method for generating a dynamic three-dimensional cloth, the method comprising:

   receiving, with a decoder, a plurality of parameters indicating a body motion, a body shape, and a characteristic of a clothing material; and
   generating, with the decoder, a dynamic three-dimensional clothing based on the plurality of parameters, wherein the dynamic three-dimensional clothing is dynamic with respect to the body motion and the body shape.

2. The method of claim 1, further comprising:

   responsive to receiving the plurality of parameters, determining, with the decoder, whether a latent diffusion model and a template garment are encoded in a bitstream;
   responsive to determining that the latent diffusion model and the template garment are encoded in the bitstream, decoding, with the decoder, the latent diffusion model and the template garment from the bitstream;
   wherein the dynamic three-dimensional clothing is generated with the decoder using the latent diffusion model and the template garment.

3. The method of claim 2, wherein the latent diffusion model is trained on a ground-truth two-dimensional UV displacement map conditioned on the plurality of parameters.

4. The method of claim 3, wherein generating, with the decoder, the dynamic three-dimensional clothing based on the plurality of parameters further includes

   generating, with the latent diffusion model as trained, a predicted two-dimensional UV displacement map for a noise sample conditioned on inputs corresponding to the plurality of parameters; and
   mapping the predicted two-dimensional UV displacement map to a three-dimensional object model.

5. The method of claim 4, further comprising:

   optimizing the noise sample by minimizing texels distance, collision loss, and temporal consistency loss, wherein the noise sample is a sampled Gaussian noise.

6. The method of claim 4, wherein mapping the predicted two-dimensional UV displacement map to a three-dimensional body model includes

   adding the predicted two-dimensional UV displacement map to a UV map of a mean shape to obtain a two-dimensional UV displacement map of a dynamic three-dimensional cloth, and
   applying an inverse function to apply the two-dimensional UV displacement map of the dynamic three-dimensional clothing to a three-dimensional surface of the three-dimensional body model.

7. The method of claim 1, further comprising:

   responsive to receiving the plurality of parameters, determining, with the decoder, whether a latent diffusion model and a template garment are flagged in a bitstream;
   responsive to determining that the latent diffusion model and the template garment are flagged in the bitstream, determining whether the flagged latent diffusion model and the flagged template garment are available in a local memory; and
   responsive to determining that the latent diffusion model and the template garment are available in the local memory, generating, with the decoder using the flagged latent diffusion model and the flagged template garment, the dynamic three-dimensional clothing based on the plurality of parameters.

8. The method of claim 7, wherein the flagged latent diffusion model is one of a plurality of latent diffusion models stored in the local memory, wherein the flagged template garment is one of a plurality of template garments stored in the local memory, and wherein each of the plurality of template garments is associated with one of the plurality of latent diffusion models.

9. The method of claim 1, further comprising:

responsive to receiving the plurality of parameters, determining, with the decoder, whether a latent diffusion model and a template garment are flagged in a bitstream;
responsive to determining that the latent diffusion model and the template garment are flagged in the bitstream, determining whether the flagged latent diffusion model and the flagged template garment are available in a local memory; and
responsive to determining that the flagged latent diffusion model and the flagged template garment are not available in the local memory, identifying, with the decoder, a second decoder that stores flagged latent diffusion model and the flagged template garment, the second decoder is distinct from the decoder;
wherein generating, with the decoder, the dynamic three-dimensional clothing based on the plurality of parameters further includes

outputting the plurality of parameters, an identification of the flagged latent diffusion model, and an identification of the flagged template garment to the second decoder, and
receiving the dynamic three-dimensional clothing from the second decoder.

10. A method of encoding data, the method comprising:

encoding, with an encoder, a latent diffusion model and a template garment into a bitstream, wherein the latent diffusion model is conditioned on a plurality of parameters indicating a body motion, a body shape, and a characteristic of a clothing material; and
outputting, with the encoder, the encoded bitstream.

11. The method of claim 10, further comprising:
training the latent diffusion model on a ground-truth two-dimensional UV displacement map.

12. The method of claim 11, wherein training the latent diffusion model on the ground-truth two-dimensional UV displacement map includes:

encoding, with the encoder, the ground-truth two-dimensional UV displacement map into a latent space;
adding random noise to the encoded two-dimensional UV displacement map encoded in the latent space;
decoding, with a decoder, the encoded two-dimensional UV displacement map to generate a decoded two-dimensional UV displacement map; and
minimizing a prediction error between the ground-truth two-dimensional UV displacement map and the decoded two-dimensional UV displacement map.

13. A device comprising an encoder configured to perform any of claims 10-12.

14. A device comprising a decoder configured to perform any of claims 1-9.

15. A non-transitory computer-readable medium comprising instructions that, when executed by an electronic processor, cause the electronic processor to perform any of claims 1-9.

**FIG. 1**

FIG. 2

FIG. 3

405

400

FIG. 4

**FIG. 5**

**FIG. 6**

**FIG. 7**

800

ENCODING, WITH ENCODER, LATENT DIFFUSION MODEL AND TEMPLATE GARMENT INTO BITSTREAM, THE LATENT DIFFUSION MODEL IS CONDITIONED ON PLURALITY OF PARAMETERS INDICATING BODY MOTION, BODY SHAPE, AND CHARACTERISTIC OF A CLOTH MATERIAL

805

OUTPUTTING, WITH ENCODER, ENCODED BITSTREAM

810

# FIG. 8

900

RECEIVING, WITH DECODER, PLURALITY OF PARAMETERS INDICATING BODY MOTION, BODY SHAPE, AND CHARACTERISTIC OF CLOTH MATERIAL

905

GENERATING, WITH DECODER, DYNAMIC THREE-DIMENSIONAL CLOTH BASED ON PLURALITY OF PARAMETERS, THE DYNAMIC THREE-DIMENSIONAL CLOTH IS DYNAMIC WITH RESPECT TO BODY MOTION AND BODY SHAPE

910

# FIG. 9

**EUROPEAN SEARCH REPORT**

Application Number

EP 24 30 6898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IGOR SANTESTEBAN ET AL: "SNUG: Self-Supervised Neural Dynamic Garments", ARXIV.ORG, CORNELL UNIVERSITY LIBRARY, 201 OLIN LIBRARY CORNELL UNIVERSITY ITHACA, NY 14853, 5 April 2022 (2022-04-05), XP091200241, * the whole document * | 1-15 | INV.<br>H04N19/597<br>G06N3/045<br>G06T9/00<br>G06T13/40<br>G06T17/00 |
| X | YUFEI LIU ET AL: "ClotheDreamer: Text-Guided Garment Generation with 3D Gaussians", ARXIV.ORG, CORNELL UNIVERSITY LIBRARY, 201 OLIN LIBRARY CORNELL UNIVERSITY ITHACA, NY 14853, 24 June 2024 (2024-06-24), XP091799478, * the whole document * | 1-15 | |
| A | SANTESTEBAN IGOR ET AL: "Self-Supervised Collision Handling via Generative 3D Garment Models for Virtual Try-On", 2021 IEEE/CVF CONFERENCE ON COMPUTER VISION AND PATTERN RECOGNITION (CVPR), 13 May 2021 (2021-05-13), pages 11758-11768, XP055884003, arXiv.org, Cornell University, USA DOI: 10.1109/CVPR46437.2021.01159 ISBN: 978-1-6654-4509-2 Retrieved from the Internet: URL:https://arxiv.org/pdf/2105.06462.pdf> * the whole document * | 1-15 | **TECHNICAL FIELDS SEARCHED (IPC)**<br>H04N<br>G06T<br>G06N |

-/--

The present search report has been drawn up for all claims

| Place of search | Date of completion of the search | Examiner |
|---|---|---|
| The Hague | 2 April 2025 | André, Thomas |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM BYUNGJUN ET AL: "Chupa: Carving 3D Clothed Humans from Skinned Shape Priors using 2D Diffusion Probabilistic Models", 2023 IEEE/CVF INTERNATIONAL CONFERENCE ON COMPUTER VISION (ICCV), IEEE, 1 October 2023 (2023-10-01), pages 15919-15930, XP034515469, DOI: 10.1109/ICCV51070.2023.01463 [retrieved on 2024-01-15] * the whole document * | 1-15 | |
| A | REN LI ET AL: "Reconstruction of Manipulated Garment with Guided Deformation Prior", ARXIV.ORG, CORNELL UNIVERSITY LIBRARY, 201 OLIN LIBRARY CORNELL UNIVERSITY ITHACA, NY 14853, 17 May 2024 (2024-05-17), XP091759998, * the whole document * | 1-15 | |
| A | ALBERTO BALDRATI ET AL: "Multimodal Garment Designer: Human-Centric Latent Diffusion Models for Fashion Image Editing", ARXIV.ORG, CORNELL UNIVERSITY LIBRARY, 201 OLIN LIBRARY CORNELL UNIVERSITY ITHACA, NY 14853, 23 August 2023 (2023-08-23), XP091586207, * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 2 April 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**page 2 of 2**